# EUROPEAN PATENT APPLICATION

(11) **EP 3 972 307 A1**
(43) Date of publication of application: **23.03.2022**
(21) Application number: 20832833.6
(22) Date of filing: 09.04.2020
(51) Int. Cl.: H04W 12/02

(54) **ACCESS REQUEST TRANSMISSION AND PROCESSING METHODS, AND DEVICE**

(30) Priority: 25.06.2019 CN 201910556362
(71) Applicant: ZTE Corporation, Shenzhen, Guangdong 518057 (CN)
(72) Inventor: BAI, Xiaochun, Shenzhen, Guangdong 518057 (CN)
(74) Representative: Raynor, Simon Mark
(86) International application number: PCT/CN2020/084020
(87) International publication number: WO 2020/258988

(57) **Abstract**

Methods and apparatus for sending and processing an access request are provided. The method for sending an access request includes: processing (S201) a terminal identifier using a first anonymization algorithm and a first configuration parameter to obtain an intermediate operator configured to identify the terminal identifier of an access layer of a core network for different regions, and the terminal identifier is stored in both a terminal and an identity authentication server of the core network; processing (S203) the intermediate operator using a second anonymization algorithm and a second configuration parameter to obtain an uplink anonymized string; and sending (S205) an access request carrying the uplink anonymized string and the second configuration parameter to the core network, the access request being configured to request for access to the core network and instruct the core network to match the uplink anonymized string and the second configuration parameter stored locally with the uplink anonymized string and the second configuration parameter carried in the access request.

## Description

### CROSS REFERENCE TO RELATED APPLICATIONS

The present application claims priority to Chinese patent application No. 201910556362.1 filed June 25, 2019, which is incorporated by reference herein in its entirety.

### TECHNICAL FIELD

The embodiments of the present disclosure relate to the field of communication technology, in particular to a method and an apparatus for sending an access request, and a method and an apparatus for processing an access request.

### BACKGROUND

In the field of wireless communication, when a terminal initially accesses the network, or synchronization between the core network and the terminal is lost, a unique identifier of the terminal (IMSI is used for 2/3/4G, and SUPI/SUCI is used for 5G) is required for identity identification of the terminal. In this process, an attacker usually uses this occasion to send a terminal identification request message to the terminal. After receiving the message, the terminal uses its own identity for access. In this case, the unique identifier of the user is easily stolen by the attacker.

In present, there is no reasonable solution to the problem that the identity of the terminal is easily stolen by the attacker.

### SUMMARY

Embodiments of the present disclosure provide a method and an apparatus for sending an access request, and a method and an apparatus for processing an access request.

According to an embodiment of the present disclosure, a method for sending an access request is provided, including: processing a terminal identifier using a first anonymization algorithm and a first configuration parameter to obtain an intermediate operator, where the intermediate operator is configured to identify the terminal identifier of an access layer of a core network for different regions, and the terminal identifier is stored in both a terminal and an identity authentication server of the core network; processing the intermediate operator using a second anonymization algorithm and a second configuration parameter to obtain an uplink anonymized string; and sending an access request carrying the uplink anonymized string and the second configuration parameter to the core network, where the access request is configured to request for access to the core network and instruct the core network to match the uplink anonymized string and the second configuration parameter stored locally with the uplink anonymized string and the second configuration parameter carried in the access request.

According to another embodiment of the present disclosure, a method for processing an access request is further provided, including: receiving an access request sent by a terminal, where the access request is configured to request for access to a core network, the access request carries an uplink anonymized string and a second configuration parameter, the uplink anonymized string is obtained by the terminal processing an intermediate operator by using a second anonymization algorithm and a second configuration parameter, the intermediate operator is obtained by the terminal processing a terminal identifier by the terminal by using a first anonymization algorithm and a first configuration parameter, the intermediate operator is configured to identify the terminal identifier of an access layer of a core network for different regions, and the terminal identifier is stored in both the terminal and an identity authentication server of the core network; and matching the uplink anonymized string and the second configuration parameter carried in the access request with the uplink anonymized string and the second configuration parameter locally stored in the core network.

According to another embodiment of the present disclosure, an apparatus for sending an access request is further provided, including: a first processing module, a second processing module and a sending module. The first processing module is configured to process a terminal identifier using a first anonymization algorithm and a first configuration parameter to obtain an intermediate operator. The intermediate operator is configured to identify the terminal identifier of an access layer of a core network for different regions. The terminal identifier is stored in both a terminal and an identity authentication server of the core network. The second processing module is configured to process the intermediate operator using a second anonymization algorithm and a second configuration parameter to obtain an uplink anonymized string. The sending module is configured to send an access request carrying the uplink anonymized string and the second configuration parameter to the core network. The access request is configured to request for access to the core network and instruct the core network to match the uplink anonymized string and the second configuration parameter stored locally with the uplink anonymized string and the second configuration parameter carried in the access request.

According to another embodiment of the present disclosure, an apparatus for processing an access request is further provided, including: a receiving module and a matching module. The receiving module is configured to receive an access request sent by a terminal. The access request is configured to request for access to a core network. The access request carries an uplink anonymized string and a second configuration parameter. The uplink anonymized string is obtained by the terminal processing an intermediate operator by using a second anonymization algorithm and a second configuration parameter. The intermediate operator is obtained by the terminal processing a terminal identifier by the terminal by using a first anonymization algorithm and a first configuration parameter. The intermediate operator is configured to identify the terminal identifier of an access layer of a core network for different regions. The terminal identifier is stored in both the terminal and an identity authentication server of the core network. The matching module is configured to match the uplink anonymized string and the second configuration parameter carried in the access request with the uplink anonymized string and the second configuration parameter locally stored in the core network.

According to another embodiment of the present disclosure, a storage medium is further provided. The storage medium stores a computer program that, when executed, causes a processor to perform a method according to any one of the aforementioned embodiments.

According to another embodiment of the present disclosure, an electronic device is further provided. The electronic device includes a memory and a processor. The memory stores a computer program, when executed, causing the processor to perform a method according to any one of the aforementioned embodiments.

### BRIEF DESCRIPTION OF THE DRAWINGS

The accompanying drawings described herein are intended to provide a further understanding of the present disclosure and constitute a part of the present disclosure. The illustrative embodiments of the present disclosure and the description thereof are intended to explain the present disclosure and do not constitute an undue limitation to the present disclosure.
FIG. 1 is a block diagram of a hardware of a mobile terminal of a method for sending an access request according to an embodiment of the present disclosure.
FIG. 2 is a flowchart of a method for sending an access request according to an embodiment of the present disclosure.
FIG. 3 is a flowchart of a method for processing an access request in an embodiment of the present disclosure.
FIG. 4 is a schematic flowchart of an anonymization algorithm according to an embodiment of the present disclosure.
FIG. 5 is a schematic diagram for visualizing information related to terminal identification according to an embodiment of the present disclosure.
FIG. 6 is a structural block diagram of an apparatus for sending an access request according to an embodiment of the present disclosure.
FIG. 7 is a structural block diagram of an apparatus for sending an access request according to an embodiment of the present disclosure.
FIG. 8 is a first schematic diagram of an anonymization algorithm according to an embodiment of the present disclosure.
FIG. 9 is a second schematic diagram of an anonymization algorithm according to an embodiment of the present disclosure.
FIG. 10 is a third schematic diagram of an anonymization algorithm according to an embodiment of the present disclosure.
FIG. 11 is an interaction flowchart of a terminal initially accessing a core network according to an embodiment of the present disclosure.
FIG. 12 is an interaction diagram of a configuration flow of a configuration parameter 2 according to an embodiment of the present disclosure.
FIG. 13 is a flowchart of accessing of a terminal when both a configuration parameter 1 and a configuration parameter 2 are valid according to an embodiment of the present disclosure.
FIG. 14 is an interaction flowchart of a core network paging a designated telephone number according to an embodiment of the present disclosure.
FIG. 15 is an interaction flowchart of a terminal accessing in an international roaming state according to an embodiment of the present disclosure.

### DETAILED DESCRIPTION

The present disclosure will be described in detail below with reference to the accompanying drawings and in combination with embodiments. It should be noted that the embodiments of the present disclosure and the features therein may be combined with each other without conflict.

It should be noted that the terms "first," "second," and the like in the description and claims of the present disclosure and the above-mentioned drawings are used to distinguish similar objects and are not necessarily used to describe a particular order or precedence.

### Embodiment 1

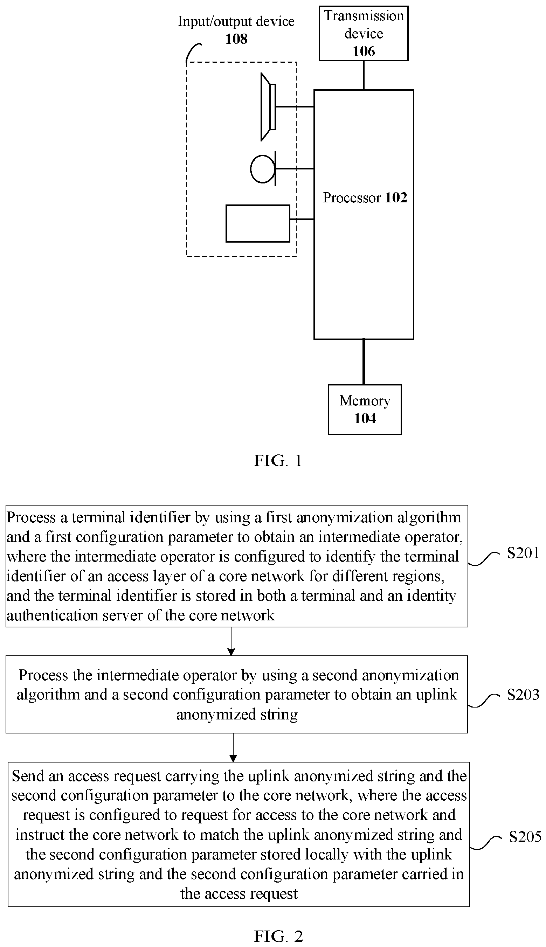

A method for sending an access request is provided in Embodiment 1 of the present disclosure and is executable in a mobile terminal, a computer terminal, or a similar computing device. Taking a mobile terminal as an example, FIG. 1 is a block diagram of a hardware of a mobile terminal of a method for sending an access request according to an embodiment of the present disclosure. As shown in FIG. 1, the mobile terminal 10 may include one or more processors 102 (only one shown in FIG. 1) and a memory 104 for storing data. The one or more processors 102 may include, but is not limited to, a processing device such as a microprocessor MCU, a programmable logic device FPGA, or the like. Optionally, the mobile terminal may further include a transmission device 106 for communication and an input/output device 108. Those skilled in the art will appreciate that the structure shown in FIG. 1 is merely schematic and does not constitute a limitation to the structure of the mobile terminal. For example, the mobile terminal 10 may also include more or fewer components than those shown in FIG. 1, or have a different configuration than those shown in FIG. 1.

The memory 104 may be configured to store a computer program, for example, a software program and a module of an application, such as a computer program corresponding to a method for scheduling throughput in the embodiments of the present disclosure. The processor 102 performs various functional applications and data processing, that is, performs the above-described method, by executing the computer program stored in the memory 104. The memory 104 may include high-speed random access memory, and may further include non-volatile memory such as one or more magnetic storage devices, flash memory, or other non-volatile solid-state memory. In some examples, the memory 104 may further include a memory remotely disposed relative to the processor 102, which may be connected to the mobile terminal 10 over a network. Examples of the above networks include, but are not limited to, the Internet, an intranet, a local area network, a mobile communication network, and combinations thereof.

The transmission device 106 is configured to receive or send data over a network. A specific example of the network described above may include a wireless network provided by a communication provider of the mobile terminal 10. In one example, the transmission device 106 includes a network interface controller (NIC) that can be connected to other network devices via a base station to communicate with the Internet. In one example, the transmission device 106 may be a radio frequency (RF) module for communication with the Internet in a wireless manner.

Embodiments of the present disclosure provide a method for sending an access request. FIG. 2 is a flowchart of the method for sending an access request according to an embodiment of the present disclosure. As shown in FIG. 2, the method includes operations as follows.

In S201, a terminal identifier is processed by using a first anonymization algorithm and a first configuration parameter to obtain an intermediate operator. The intermediate operator is configured to identify the terminal identifier of an access layer of a core network for different regions. The terminal identifier is stored in both a terminal and an identity authentication server of the core network.

In S203, the intermediate operator is processed by using a second anonymization algorithm and a second configuration parameter to obtain an uplink anonymized string.

In S205, an access request carrying the uplink anonymized string and the second configuration parameter is sent to the core network. The access request is configured to request for access to the core network and instruct the core network to match the uplink anonymized string and the second configuration parameter stored locally with the uplink anonymized string and the second configuration parameter carried in the access request.

Through the above method, the terminal identifier is encrypted bidirectionally when the terminal interacts with the core network. Due to interaction by the uplink anonymized string and the downlink anonymized string, and through the intermediate operator, interaction between terminal identifiers of core networks in different regions can be encrypted. The terminal identifier is stored only in both the terminal and the identity authentication server of the core network, and the access server of the core network uses the intermediate operator and the anonymized string to identify the terminal. The existing problem that the identity of the terminal is easily stolen by the attacker is effectively solved, and the identity of the terminal is difficult to be matched and utilized by the attacker. The anonymized strings, instead of terminal identifiers, are used for identification during accessing, which can effectively prevent the terminal identifiers from being leaked out.

According to a preferred embodiment of the present disclosure, when the access request is an access request of the terminal for an initial access to the core network, each of the first configuration parameter and the second configuration parameter is a default value, and after sending the access request carrying the uplink anonymized string and the default value of the second configuration parameter to the core network, the method further includes: receiving a first negotiation message issued by the core network, where the first negotiation message carries a negotiation value of the first configuration parameter randomly generated by the core network; and resending the access request to the core network by using the negotiation value of the first configuration parameter and the default value of the second configuration parameter.

It should be noted that when the terminal initially accesses the core network, each of the first configuration parameter and the second configuration parameter used for generating the uplink anonymized string is a default value, that is, a parameter value agreed in advance between the terminal and the core network. The terminal identifier is processed by using the first anonymization algorithm and the default value of the first configuration parameter to obtain the intermediate operator, and then the intermediate operator is processed by using the second anonymization algorithm and the default value of the second configuration parameter to obtain the uplink anonymized string. After the uplink anonymized string is sent to the core network, the core network matches the received uplink anonymized string according to the default value of the second configuration parameter, the default value of the first parameter and the terminal identifier that are stored locally. After successful matching, the core network sends the randomly generated negotiation value of the first configuration parameter to the terminal. In other words, after confirming the identity of the terminal, one first configuration parameter is assigned to the terminal to facilitate encryption of the subsequent accessing. After receiving the negotiation value of the first configuration parameter, the terminal processes the terminal identifier by using the first anonymization algorithm and the negotiation value of the first configuration parameter to obtain a new intermediate operator, then process the new intermediate operator by using the second anonymization algorithm and the default value of the second configuration parameter to obtain a new uplink anonymized string, and resend the access request to the core network.

According to a preferred embodiment of the present disclosure, after resending the access request to the core network using the negotiation value of the first configuration parameter and the default value of the second configuration parameter, the method further includes: receiving a second negotiation message issued by the core network, where the second negotiation message carries a negotiation value of the second configuration parameter randomly generated by the core network.

It should be noted that, after matching the uplink anonymized string sent by the terminal, the core network side randomly generates a negotiation value of the second configuration parameter, and sends the negotiation value of the second configuration parameter to the terminal. The terminal re-generates the uplink anonymized string by using the negotiation value of the first configuration parameter and the negotiation value of the second configuration parameter, and resends the access request to the core network. In this case, the terminal may be considered as formally accessing the core network, and the terminal side and the core network side store the negotiation value of the first configuration parameter and the negotiation value of the second configuration parameter, respectively, which may be understood as storing, respectively, the negotiation value of the second configuration parameter and the intermediate operator obtained by using the negotiation value of the first configuration parameter.

According to a preferred embodiment of the present disclosure, the method further includes: receiving, by the terminal, a paging message from the core network, where the paging message carries a downlink anonymized string, and the downlink anonymized string is obtained by the core network by processing the intermediate operator using a third anonymization algorithm and the second configuration parameter; and determining, by the terminal, whether an object paged by the downlink anonymized string is the terminal itself through the downlink anonymized string as well as the first configuration parameter and the second configuration parameter stored locally.

It should be noted that when the core network needs to page a designated telephone number, the access server of the core network initiates a telephone number identification request to an identification server. The identification server identifies a terminal through the telephone number, returns an anonymized intermediate operator of the terminal, and sends it to the access server of the core network where the terminal is closest. The access server of the core network identifies the terminal through the intermediate operator, and obtains a current second configuration parameter of the terminal. The access server of the core network calculates a downlink anonymized string through the second configuration parameter and the intermediate operator, and initiates paging. The base station initiates a paging message using the downlink anonymized string. After receiving the downlink anonymized string, the terminal matches the downlink anonymized string with a downlink anonymized string in a current configuration, and initiates an access request if the matching is successful. A terminal access request message carries an uplink anonymized string calculated by the current configuration parameter and the second configuration parameter to initiate the access request. After receiving the uplink anonymized string and the second configuration parameter, the access server of the core network matches the terminal, and completes terminal identification in the paging process if the matching is successful. Other processes can be followed. Paging and terminal paging response messages are performed with different anonymized strings, which can prevent attacks during matching.

Alternatively, the matching of the downlink anonymized string of the terminal may be as follows. The terminal decrypts the downlink anonymized string by using a third anonymization algorithm and a currently configured second configuration parameter to obtain an intermediate operator, and then decrypts the intermediate operator by using a currently configured first configuration parameter to obtain a terminal identifier. After comparing the terminal identifier with the terminal's own identifier, the terminal determines whether a paged object is the terminal itself.

According to a preferred embodiment of the present disclosure, before receiving the first negotiation message or the second negotiation message issued by the core network, the method further includes performing, by the terminal, bidirectional authentication with the core network using a public key and a private key that are pre-agreed.

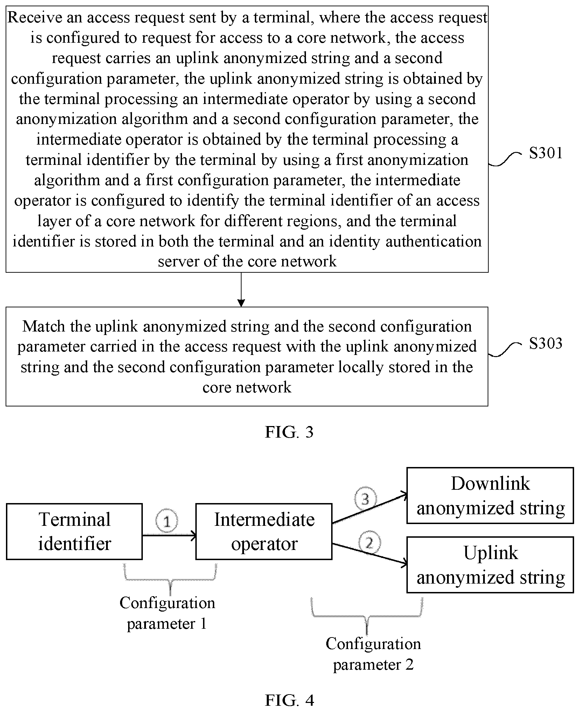

According to another embodiment of the present disclosure, a method for processing an access request is further provided. FIG. 3 is a flowchart of a method for processing an access request in an embodiment of the present disclosure. As shown in FIG. 3, the method includes operations as follows.

In S301, an access request sent by a terminal is received, where the access request is configured to request for access to a core network, the access request carries an uplink anonymized string and a second configuration parameter, the uplink anonymized string is obtained by the terminal processing an intermediate operator by using a second anonymization algorithm and a second configuration parameter, the intermediate operator is obtained by the terminal processing a terminal identifier by the terminal by using a first anonymization algorithm and a first configuration parameter, the intermediate operator is configured to identify the terminal identifier of an access layer of a core network for different regions, and the terminal identifier is stored in both the terminal and an identity authentication server of the core network.

In S303, the uplink anonymized string and the second configuration parameter carried in the access request are matched with the uplink anonymized string and the second configuration parameter locally stored in the core network.

Through the above method, the terminal identifier is encrypted bidirectionally when the terminal interacts with the core network. Due to interaction by the uplink anonymized string and the downlink anonymized string, and through the intermediate operator, interaction between terminal identifiers of core networks in different regions can be encrypted. The terminal identifier is stored only in both the terminal and the identity authentication server of the core network, and the access server of the core network uses the intermediate operator and the anonymized string to identify the terminal. The existing problem that the identity of the terminal is easily stolen by the attacker is effectively solved, and the identity of the terminal is difficult to be matched and utilized by the attacker. The anonymized strings, instead of terminal identifiers, are used for identification during accessing, which can effectively prevent the terminal identifiers from being leaked out.

According to a preferred embodiment of the present disclosure, when the access request is an access request of the terminal for an initial access to the core network, each of the first configuration parameter and the second configuration parameter is a default value, and after receiving the access request, the method further includes: sending, by an access server of the core network, the uplink anonymized string to the identity authentication server of the core network; generating randomly, by the identity authentication server, a negotiation value of the first configuration parameter after matching of the uplink anonymized string and the second configuration parameter; and sending, by the identity authentication server, a first negotiation message to the terminal, where the first negotiation message carries the negotiation value of the first configuration parameter, and the first negotiation message is configured to instruct the terminal to resend the access request to the core network using the negotiation value of the first configuration parameter and the default value of the second configuration parameter.

It should be noted that the terminal identifier is stored only in both the terminal and the identity authentication server of the core network, and the access server of the core network uses the intermediate operator and the anonymized string to identify the terminal. When failing to match the terminal, the access server sends the uplink anonymized string to the authentication server for matching, thereby preventing the terminal identifier from being leaked out when the access layer of the core network is attacked.

When the terminal initially accesses the core network, each of the first configuration parameter and the second configuration parameter used for generating the uplink anonymized string is a default value, that is, a parameter value agreed in advance between the terminal and the core network. The terminal identifier is processed by using the first anonymization algorithm and the default value of the first configuration parameter to obtain the intermediate operator, and then the intermediate operator is processed by using the second anonymization algorithm and the default value of the second configuration parameter to obtain the uplink anonymized string. After the uplink anonymized string is sent to the core network, the core network matches the received uplink anonymized string according to the default value of the second configuration parameter, the default value of the first parameter and the terminal identifier that are stored locally. After successful matching, the core network sends the randomly generated negotiation value of the first configuration parameter to the terminal. In other words, after confirming the identity of the terminal, one first configuration parameter is assigned to the terminal to facilitate encryption of the subsequent accessing. After receiving the negotiation value of the first configuration parameter, the terminal processes the terminal identifier by using the first anonymization algorithm and the negotiation value of the first configuration parameter to obtain a new intermediate operator, then process the new intermediate operator by using the second anonymization algorithm and the default value of the second configuration parameter to obtain a new uplink anonymized string, and resend the access request to the core network.

According to a preferred embodiment of the present disclosure, after the identity authentication server sends the first negotiation message to the terminal, the method further includes: receiving, by the access server, the access request resent by the terminal, where the resent access request carries a newly generated uplink anonymized string and the default value of the second configuration parameter, and the newly generated uplink anonymized string is obtained by the terminal processing the terminal identifier by using the negotiation value of the first configuration parameter and the default value of the second configuration parameter; sending, by the access server, the newly generated uplink anonymized string to the identity authentication server; sending, by the identity authentication server, a newly generated intermediate operator to the access server after matching the terminal, where the newly generated intermediate operator is obtained by using the negotiation value of the first configuration parameter; storing, by the access server, the newly generated intermediate operator acquired from the identity authentication server, and generating randomly a negotiation value of the second configuration parameter; and issuing, by the access server, a second negotiation message to the terminal, where the second negotiation message carries the negotiation value of the second configuration parameter.

It should be noted that the negotiation values of the first configuration parameter and the second configuration parameter are respectively configured by the identity authentication server and the access server, and different encryption algorithms (i.e., anonymization algorithms) are employed respectively for the intermediate operator and the anonymized string, which can further improve the security of the terminal identifier.

According to a preferred embodiment of the present disclosure, the method further includes: when needing to initiate paging to a designated terminal, receiving, by the access server, an intermediate operator of the designated terminal sent by the identity authentication server; and sending a downlink anonymized string to the designated terminal after successfully matching the designated terminal with the intermediate operator of the designated terminal, where the downlink anonymized string is obtained by the access server processing the intermediate operator of the designated terminal by using a third anonymization algorithm and the second configuration parameter, and the downlink anonymized string is configured to instruct the designated terminal to send an access request to the access server.

It should be noted that when the core network needs to page a designated telephone number, the access server of the core network initiates a telephone number identification request to an identification server. The identification server identifies a terminal through the telephone number, returns an anonymized intermediate operator of the terminal, and sends it to the access server of the core network where the terminal is closest. The access server of the core network identifies the terminal through the intermediate operator, and obtains a current second configuration parameter of the terminal. The access server of the core network calculates a downlink anonymized string through the second configuration parameter and the intermediate operator, and initiates paging. The base station initiates a paging message using the downlink anonymized string. After receiving the downlink anonymized string, the terminal matches the downlink anonymized string with a downlink anonymized string in a current configuration, and initiates an access request if the matching is successful. A terminal access request message carries an uplink anonymized string calculated by the current configuration parameter and the second configuration parameter to initiate the access request. After receiving the uplink anonymized string and the second configuration parameter, the access server of the core network matches the terminal, and completes terminal identification in the paging process if the matching is successful. Other processes can be followed. Paging and terminal paging response messages are performed with different anonymized strings, which can prevent attacks during matching.

According to a preferred embodiment of the present disclosure, when the terminal initially sends the access request to a core network at an access location during roaming, the method further includes: sending, by the core network at the access location, the uplink anonymized string carried in the access request to a core network at a home location of the terminal; receiving, by the core network at the access location, an intermediate operator sent by the core network at the home location, where the intermediate operator received is obtained by the core network at the home location processing by using the negotiation value of the first configuration parameter; storing, by the core network at the access location, the intermediate operator obtained from the core network at the home location, and generating randomly a negotiation value of the second configuration parameter; and sending, by the core network at the access location, the negotiation value of the second configuration parameter randomly generated to the terminal.

It should be noted that an access flow of a terminal in the international roaming state may include operations as follows.

Firstly, when initially accessing in an international roaming area, the terminal calculates an uplink anonymized string by using the default values 0 of the first configuration parameter and the second configuration parameter, and initiates an access request which carries the anonymized string, the second configuration parameter and a public land mobile (communication) network, PLMN, at a home location.

Secondly, after receiving the uplink anonymized string, a local core network fails to match the terminal locally, and performs identity authentication to a core network at the home location of the terminal, and the authentication information carries the uplink anonymized string.

Thirdly, after completing identification by using the anonymized string, the core network at the home location initiates an authentication process.

Fourthly, after the authentication succeeds, the core network at the home location sends an intermediate operator of the terminal to the local core network.

Fifthly, the local core network stores the intermediate operator.

Sixthly, a new second configuration parameter is randomly generated and a corresponding uplink anonymized string is calculated. The local core network ensures that the second configuration parameter and the uplink anonymized string are unique in the access server.

Seventhly, after completing the generation of the second configuration parameter, the local core network sends the second configuration parameter to the terminal.

Eighthly, after receiving the second configuration parameter, the terminal stores the second configuration parameter and responds to a configuration validation message.

The terminal identifier is stored only in both the terminal and the identity authentication server of the core network, and the access server of the core network uses the intermediate operator and the anonymized string to identify the terminal. When the user is roaming across operators or roaming internationally, the local operator is prevented from obtaining information of the terminal identifier, and for protection of the user identifier, no preset operator public key is required.

In order to better understand the technical solutions described in the embodiments of the present disclosure, the above solutions are summarized as follows.

The present disclosure employs combined anonymization processing to implement hierarchical processing of the anonymization algorithm, and takes advantage of the characteristics of the anonymization processing to construct different anonymized strings of uplink and downlink for the terminal identifier. The terminal and the wireless network perform identification through the different anonymized strings, and with the anonymized strings used during accessing, paging and roaming, the user identifier is prevented from being leaked out.

FIG. 4 is a schematic flowchart of an anonymization algorithm according to an embodiment of the present disclosure. As shown in FIG. 4, for a terminal identifier, an intermediate operator is obtained by an anonymization algorithm 1 (i.e., the first anonymization algorithm described above), during which a configuration parameter 1 (i.e., the first configuration parameter described above) is employed in the anonymization processing. With an anonymization algorithm 2 (i.e., the second anonymization algorithm described above) and an anonymization algorithm 3 (i.e., the third anonymization algorithm described above), the uplink anonymized string and the downlink anonymized string are calculated respectively by using the intermediate operator. A same configuration parameter 2 (i.e., the second configuration parameter described above) is employed in the anonymization process by the anonymization algorithm 2 and the anonymization algorithm 3.

After the above anonymization processing is implemented, the uplink anonymized string and the downlink anonymized string can be obtained by using the configuration parameter 1 and the configuration parameter 2. During access of the terminal, the uplink anonymized string and configuration parameter 2 can be used for the access, and the core network uses the uplink anonymized string and configuration parameter 2 for terminal identification. The downlink anonymized string is employed for a paging process. In a certain scenario of the configuration parameter 1 and the configuration parameter 2, the terminal can identify whether a paged object is the terminal itself through the anonymized string.

After completing bidirectional authentication, the terminal negotiates the configuration parameter 1 with the identity authentication server of the core network, the negotiated configuration parameter 1 is stored in both the terminal and the identity authentication server of the core network, and modification of the configuration parameter 1 may not be required for a long time.

The configuration parameter 2 is negotiated between the terminal and the access server of the core network, and a frequency for modification of the parameter can be flexibly set depending on the situation.

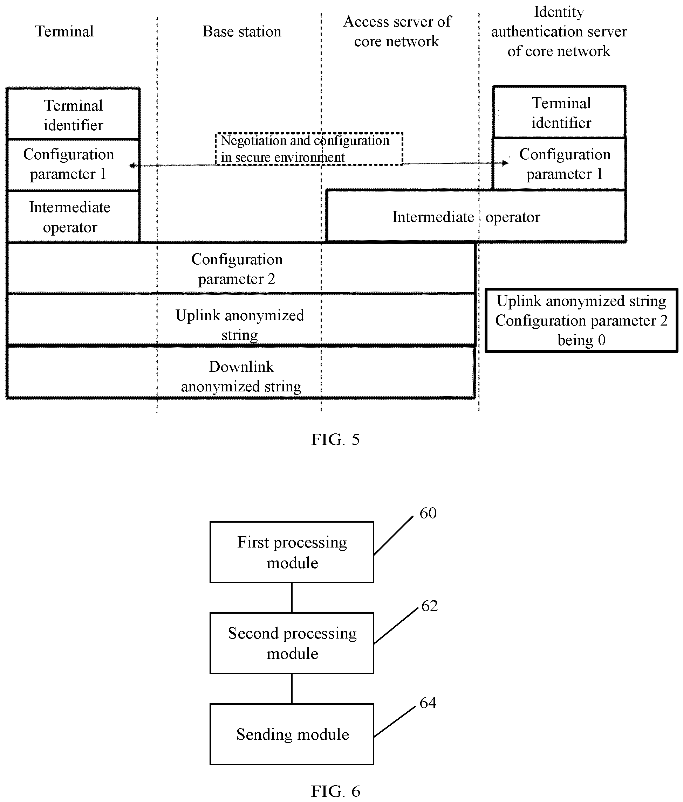

FIG. 5 is a schematic diagram for visualizing information related to terminal identification according to an embodiment of the present disclosure. FIG. 5 shows the follows.

Firstly, identity information of the terminal is stored only in both the terminal and the identity authentication server of the core network, and no interaction is required in any case.

Secondly, the configuration parameter 1 is negotiated and configured by the terminal with the identity authentication server of the core network only in a case where bidirectional authentication is successful.

Thirdly, the intermediate operator is calculated by the anonymization algorithm 1 using the configuration parameter 1 and the user identity. The terminal needs to store the intermediate operator. The identity authentication server of the core network and the access server of the core network are visible to the intermediate operator.

Fourthly, the configuration parameter 2 is negotiated and configured by the terminal with the identity authentication server of the core network, and an uplink message can be transmitted over an air interface.

Fifthly, the uplink anonymized string is obtained by the anonymization algorithm 2 using the intermediate operator and the configuration parameter 2, and can be transmitted in plain text over the air interface.

Sixthly, the downlink anonymized string is obtained by the anonymization algorithm 3 using the intermediate operator and the configuration parameter 2, and can be transmitted in plain text over the air interface.

When the terminal initially accesses, the terminal calculates the uplink anonymized string for identification by using initial values of the configuration parameter 1 and the configuration parameter 2. When the configuration parameter 1 is fixed, if the synchronization information of the configuration parameter 2 is lost, the terminal performs identification by using the initial value of the configuration parameter 2.

The method for sending/processing an access request provided in the embodiments of the present disclosure may achieve the following technical effects.

Firstly, the anonymized strings, instead of the terminal identifiers, are used for identification during accessing, which prevents the terminal identifiers from being leaked out.

Secondly, paging and terminal paging response messages are performed with different anonymized strings, which prevents attacks during matching.

Thirdly, the terminal identifier is stored only in both the terminal and the identity authentication server of the core network, and the access server of the core network uses the intermediate operator and the anonymized string to identify the terminal.

Fourthly, taking advantage of the third effect, when the user is roaming across operators or roaming internationally, the local operator is prevented from obtaining the information of the terminal identification.

Fifthly, no preset operator public key is required for protection of the user identifier.

### Embodiment 2

The embodiments of the present disclosure further provide an apparatus for sending an access request, which is configured to implement a method for sending an access request according to the foregoing embodiments and preferred embodiments. The method has been described above and will not be repeated hereafter. The term "module" used below may be a combination of software and/or hardware implementing predetermined functions. Although the apparatus described in the following embodiments is preferably realized in software, it is possible and conceivable that the apparatus may also be realized in hardware, or a combination of software and hardware.

FIG. 6 is a structural block diagram of an apparatus for sending an access request according to an embodiment of the present disclosure, as shown in FIG. 6, the apparatus includes a first processing module 60, a second processing module 62 and a sending module 64.

The first processing module 60 is configured to process a terminal identifier using a first anonymization algorithm and a first configuration parameter to obtain an intermediate operator. The intermediate operator is configured to identify the terminal identifier of an access layer of a core network for different regions, and the terminal identifier is stored in both a terminal and an identity authentication server of the core network.

The second processing module 62 is configured to process the intermediate operator using a second anonymization algorithm and a second configuration parameter to obtain an uplink anonymized string.

The sending module 64 is configured to send an access request carrying the uplink anonymized string and the second configuration parameter to the core network. The access request is configured to request for access to the core network and instruct the core network to match the uplink anonymized string and the second configuration parameter stored locally with the uplink anonymized string and the second configuration parameter carried in the access request.

Through the above apparatus, the first processing module 60 processes the terminal identifier by using the first anonymization algorithm and the first configuration parameter to obtain the intermediate operator, where the intermediate operator is configured to identify the terminal identifier of the access layer of the core network for different regions, and the terminal identifier is stored in both the terminal and the identity authentication server of the core network. The second processing module 62 processes the intermediate operator using the second anonymization algorithm and the second configuration parameter to obtain the uplink anonymized string. The sending module 64 sends the access request carrying the uplink anonymized string and the second configuration parameter to the core network, where the access request is configured to request for access to the core network and instruct the core network to match the uplink anonymized string and the second configuration parameter stored locally with the uplink anonymized string and the second configuration parameter carried in the access request. The existing problem that the identity of the terminal is easily stolen by the attacker is effectively solved, and the identity of the terminal is difficult to be matched and utilized by the attacker. The anonymized strings, instead of terminal identifiers, are used for identification during accessing, which can effectively prevent the terminal identifiers from being leaked out.

According to a preferred embodiment of the present disclosure, when the access request is an access request of the terminal for an initial access to the core network, each of the first configuration parameter and the second configuration parameter is a default value, and after sending the access request carrying the uplink anonymized string and the default value of the second configuration parameter to the core network, the method further includes: receiving a first negotiation message issued by the core network, where the first negotiation message carries a negotiation value of the first configuration parameter randomly generated by the core network; and resending the access request to the core network by using the negotiation value of the first configuration parameter and the default value of the second configuration parameter.

The apparatus further includes a receiving module configured to receive a first negotiation message issued by the core network, where the first negotiation message carries a negotiation value of the first configuration parameter randomly generated by the core network. The sending module 64 is further configured to resend the access request to the core network by using the negotiation value of the first configuration parameter and the default value of the second configuration parameter.

It should be noted that when the terminal initially accesses the core network, each of the first configuration parameter and the second configuration parameter used for generating the uplink anonymized string is a default value, that is, a parameter value agreed in advance between the terminal and the core network. The terminal identifier is processed by using the first anonymization algorithm and the default value of the first configuration parameter to obtain the intermediate operator, and then the intermediate operator is processed by using the second anonymization algorithm and the default value of the second configuration parameter to obtain the uplink anonymized string. After the uplink anonymized string is sent to the core network, the core network matches the received uplink anonymized string according to the default value of the second configuration parameter, the default value of the first parameter and the terminal identifier that are stored locally. After successful matching, the core network sends the randomly generated negotiation value of the first configuration parameter to the terminal. In other words, after confirming the identity of the terminal, one first configuration parameter is assigned to the terminal to facilitate encryption of the subsequent accessing. After receiving the negotiation value of the first configuration parameter, the terminal processes the terminal identifier by using the first anonymization algorithm and the negotiation value of the first configuration parameter to obtain a new intermediate operator, then process the new intermediate operator by using the second anonymization algorithm and the default value of the second configuration parameter to obtain a new uplink anonymized string, and resend the access request to the core network.

According to a preferred embodiment of the present disclosure, after resending the access request to the core network using the negotiation value of the first configuration parameter and the default value of the second configuration parameter, the method further includes: receiving a second negotiation message issued by the core network, where the second negotiation message carries a negotiation value of the second configuration parameter randomly generated by the core network.

The receiving module is further configured to receive a second negotiation message issued by the core network, where the second negotiation message carries a negotiation value of the second configuration parameter randomly generated by the core network.

It should be noted that, after matching the uplink anonymized string sent by the terminal, the core network side randomly generates a negotiation value of the second configuration parameter, and sends the negotiation value of the second configuration parameter to the terminal. The terminal re-generates the uplink anonymized string by using the negotiation value of the first configuration parameter and the negotiation value of the second configuration parameter, and resends the access request to the core network. In this case, the terminal may be considered as formally accessing the core network, and the terminal side and the core network side store the negotiation value of the first configuration parameter and the negotiation value of the second configuration parameter, respectively, which may be understood as storing, respectively, the negotiation value of the second configuration parameter and the intermediate operator obtained by using the negotiation value of the first configuration parameter.

According to a preferred embodiment of the present disclosure, the receiving module is further configured to receive a paging message from the core network, where the paging message carries a downlink anonymized string, and the downlink anonymized string is obtained by the core network by processing the intermediate operator using a third anonymization algorithm and the second configuration parameter. The terminal determines whether an object paged by the downlink anonymized string is the terminal itself through the downlink anonymized string as well as the first configuration parameter and the second configuration parameter stored locally.

It should be noted that when the core network needs to page a designated telephone number, the access server of the core network initiates a telephone number identification request to an identification server. The identification server identifies a terminal through the telephone number, returns an anonymized intermediate operator of the terminal, and sends it to the access server of the core network where the terminal is closest. The access server of the core network identifies the terminal through the intermediate operator, and obtains a current second configuration parameter of the terminal. The access server of the core network calculates a downlink anonymized string through the second configuration parameter and the intermediate operator, and initiates paging. The base station initiates a paging message using the downlink anonymized string. After receiving the downlink anonymized string, the terminal matches the downlink anonymized string with a downlink anonymized string in a current configuration, and initiates an access request if the matching is successful. A terminal access request message carries an uplink anonymized string calculated by the current configuration parameter and the second configuration parameter to initiate the access request. After receiving the uplink anonymized string and the second configuration parameter, the access server of the core network matches the terminal, and completes terminal identification in the paging process if the matching is successful. Other processes can be followed. Paging and terminal paging response messages are performed with different anonymized strings, which can prevent attacks during matching.

According to a preferred embodiment of the present disclosure, before receiving the first negotiation message or the second negotiation message issued by the core network, the method further includes performing, by the terminal, bidirectional authentication with the core network using a public key and a private key that are pre-agreed.

The apparatus further includes an authentication module configured to perform bidirectional authentication with the core network using a public key and a private key that are pre-agreed.

The embodiments of the present disclosure further provide an apparatus for sending an access request, which is configured to implement a method for processing an access request according to the foregoing embodiments and preferred embodiments. The method has been described above and will not be repeated hereafter. The term "module" used below may be a combination of software and/or hardware implementing predetermined functions. Although the apparatus described in the following embodiments is preferably realized in software, it is possible and conceivable that the apparatus may also be realized in hardware, or a combination of software and hardware.

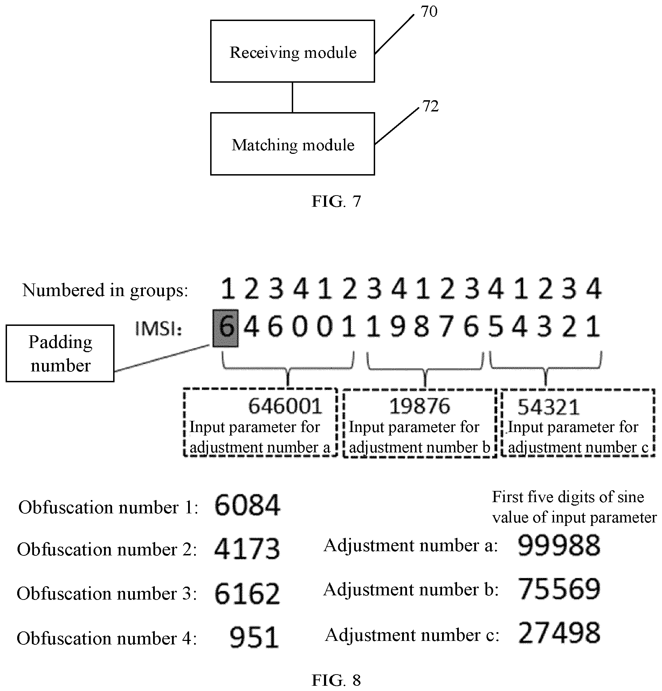

FIG. 7 is a structural block diagram of an apparatus for sending an access request according to an embodiment of the present disclosure. As shown in FIG. 7, the apparatus includes a receiving module 70 and a matching module 72.

The receiving module 70 is configured to receive an access request sent by a terminal. The access request is configured to request for access to a core network. The access request carries an uplink anonymized string and a second configuration parameter. The uplink anonymized string is obtained by the terminal processing an intermediate operator by using a second anonymization algorithm and a second configuration parameter. The intermediate operator is obtained by the terminal processing a terminal identifier by the terminal by using a first anonymization algorithm and a first configuration parameter. The intermediate operator is configured to identify the terminal identifier of an access layer of a core network for different regions. The terminal identifier is stored in both the terminal and an identity authentication server of the core network.

The matching module 72 is configured to match the uplink anonymized string and the second configuration parameter carried in the access request with the uplink anonymized string and the second configuration parameter locally stored in the core network.

Through the above apparatus, the receiving module 70 receives the access request sent by the terminal, and the matching module 72 matches the uplink anonymized string and the second configuration parameter carried in the access request with the uplink anonymized string and the second configuration parameter locally stored in the core network. The existing problem that the identity of the terminal is easily stolen by the attacker is effectively solved, and the identity of the terminal is difficult to be matched and utilized by the attacker. The anonymized strings, instead of terminal identifiers, are used for identification during accessing, which can effectively prevent the terminal identifiers from being leaked out.

According to a preferred embodiment of the present disclosure, when the access request is an access request of the terminal for an initial access to the core network, each of the first configuration parameter and the second configuration parameter is a default value, and after receiving the access request, the core network further performs operations as follows: sending, by an access server of the core network, the uplink anonymized string to the identity authentication server of the core network; generating randomly, by the identity authentication server, a negotiation value of the first configuration parameter after matching of the uplink anonymized string and the second configuration parameter; and sending, by the identity authentication server, a first negotiation message to the terminal, where the first negotiation message carries the negotiation value of the first configuration parameter, and the first negotiation message is configured to instruct the terminal to resend the access request to the core network using the negotiation value of the first configuration parameter and the default value of the second configuration parameter.

It should be noted that the terminal identifier is stored only in both the terminal and the identity authentication server of the core network, and the access server of the core network uses the intermediate operator and the anonymized string to identify the terminal. When failing to match the terminal, the access server sends the uplink anonymized string to the authentication server for matching, thereby preventing the terminal identifier from being leaked out when the access layer of the core network is attacked.

When the terminal initially accesses the core network, each of the first configuration parameter and the second configuration parameter used for generating the uplink anonymized string is a default value, that is, a parameter value agreed in advance between the terminal and the core network. The terminal identifier is processed by using the first anonymization algorithm and the default value of the first configuration parameter to obtain the intermediate operator, and then the intermediate operator is processed by using the second anonymization algorithm and the default value of the second configuration parameter to obtain the uplink anonymized string. After the uplink anonymized string is sent to the core network, the core network matches the received uplink anonymized string according to the default value of the second configuration parameter, the default value of the first parameter and the terminal identifier that are stored locally. After successful matching, the core network sends the randomly generated negotiation value of the first configuration parameter to the terminal. In other words, after confirming the identity of the terminal, one first configuration parameter is assigned to the terminal to facilitate encryption of the subsequent accessing. After receiving the negotiation value of the first configuration parameter, the terminal processes the terminal identifier by using the first anonymization algorithm and the negotiation value of the first configuration parameter to obtain a new intermediate operator, then process the new intermediate operator by using the second anonymization algorithm and the default value of the second configuration parameter to obtain a new uplink anonymized string, and resend the access request to the core network.

According to a preferred embodiment of the present disclosure, after the identity authentication server sends the first negotiation message to the terminal, the core network further performs operations as follows: receiving, by the access server, the access request resent by the terminal, where the resent access request carries a newly generated uplink anonymized string and the default value of the second configuration parameter, and the newly generated uplink anonymized string is obtained by the terminal processing the terminal identifier by using the negotiation value of the first configuration parameter and the default value of the second configuration parameter; sending, by the access server, the newly generated uplink anonymized string to the identity authentication server; sending, by the identity authentication server, a newly generated intermediate operator to the access server after matching the terminal, where the newly generated intermediate operator is obtained by using the negotiation value of the first configuration parameter; storing, by the access server, the newly generated intermediate operator acquired from the identity authentication server, and generating randomly a negotiation value of the second configuration parameter; and issuing, by the access server, a second negotiation message to the terminal, where the second negotiation message carries the negotiation value of the second configuration parameter.

It should be noted that the negotiation values of the first configuration parameter and the second configuration parameter are respectively configured by the identity authentication server and the access server, and different encryption algorithms (i.e., anonymization algorithms) are employed respectively for the intermediate operator and the anonymized string, which can further improve the security of the terminal identifier.

According to a preferred embodiment of the present disclosure, the core network further performs operations as follows: when needing to initiate paging to a designated terminal, receiving, by the access server, an intermediate operator of the designated terminal sent by the identity authentication server; and sending a downlink anonymized string to the designated terminal after successfully matching the designated terminal with the intermediate operator of the designated terminal, where the downlink anonymized string is obtained by the access server processing the intermediate operator of the designated terminal by using a third anonymization algorithm and the second configuration parameter, and the downlink anonymized string is configured to instruct the designated terminal to send an access request to the access server.

It should be noted that when the core network needs to page a designated telephone number, the access server of the core network initiates a telephone number identification request to an identification server. The identification server identifies a terminal through the telephone number, returns an anonymized intermediate operator of the terminal, and sends it to the access server of the core network where the terminal is closest. The access server of the core network identifies the terminal through the intermediate operator, and obtains a current second configuration parameter of the terminal. The access server of the core network calculates a downlink anonymized string through the second configuration parameter and the intermediate operator, and initiates paging. The base station initiates a paging message using the downlink anonymized string. After receiving the downlink anonymized string, the terminal matches the downlink anonymized string with a downlink anonymized string in a current configuration, and initiates an access request if the matching is successful. A terminal access request message carries an uplink anonymized string calculated by the current configuration parameter and the second configuration parameter to initiate the access request. After receiving the uplink anonymized string and the second configuration parameter, the access server of the core network matches the terminal, and completes terminal identification in the paging process if the matching is successful. Other processes can be followed. Paging and terminal paging response messages are performed with different anonymized strings, which can prevent attacks during matching.

According to a preferred embodiment of the present disclosure, when the terminal initially sends the access request to a core network at an access location during roaming, the core network further performs operations as follows: sending, by the core network at the access location, the uplink anonymized string carried in the access request to a core network at a home location of the terminal; receiving, by the core network at the access location, an intermediate operator sent by the core network at the home location, where the intermediate operator received is obtained by the core network at the home location processing by using the negotiation value of the first configuration parameter; storing, by the core network at the access location, the intermediate operator obtained from the core network at the home location, and generating randomly a negotiation value of the second configuration parameter; and sending, by the core network at the access location, the negotiation value of the second configuration parameter randomly generated to the terminal.

### Embodiment 3

In order to better understand the technical solutions in the embodiments of the present disclosure, the embodiments will be described by specific examples.

### Preferred Example 1

In the present example, taking a IMSI number of 460011987654321 as an example, an anonymization algorithm satisfying the condition is designed. The irreversible algorithm process is as follows.

In Operation 1, obfuscation numbers and adjustment numbers are constructed

The IMSI number is a 15-digit number, and a padding number is added in front of the number to obtain a 16-digit number. The padding number is defined as a second digit after a decimal point of a sine value of the last four digits of the IMSI number. In this example, the last four digits of the IMSI number are 4321, with a sine value of -0.966, and the second digit after the decimal point is 6, which is taken as the padding number to be padded in front of the IMSI number, as shown in FIG. 8. FIG. 8 is a first schematic diagram of an anonymization algorithm according to an embodiment of the present disclosure.

Here, the sixteen digits are divided into four groups, numbered from left to right as shown in FIG. 8. Four obfuscation numbers are obtained, which are 6084, 4173, 6162 and 951, respectively.

The four obfuscation numbers are constructed completely in order. It can be analyzed mathematically that each obfuscation number may be constructed in twenty-four construction manners according to different arrangements. These different construction manners can be used as the configuration parameter 1 of the anonymization algorithm to adjust the result of the anonymized string.

The 16-digit number added with the padding number is divided into three groups, as shown in FIG. 3. The first group includes the first six digits, the second group includes the seventh to eleventh digits, and the third group includes the twelve to sixteenth digits. A sine value is obtained from each group, and five digits after the decimal point of a respective sine value are taken as an adjustment number. In this way, three adjustment numbers are obtained. The three adjustment numbers of this example are: adjustment number a of 99988, adjustment number b of 75569, and adjustment number c of 27498.

In Operation 2, an intermediate operator is constructed.

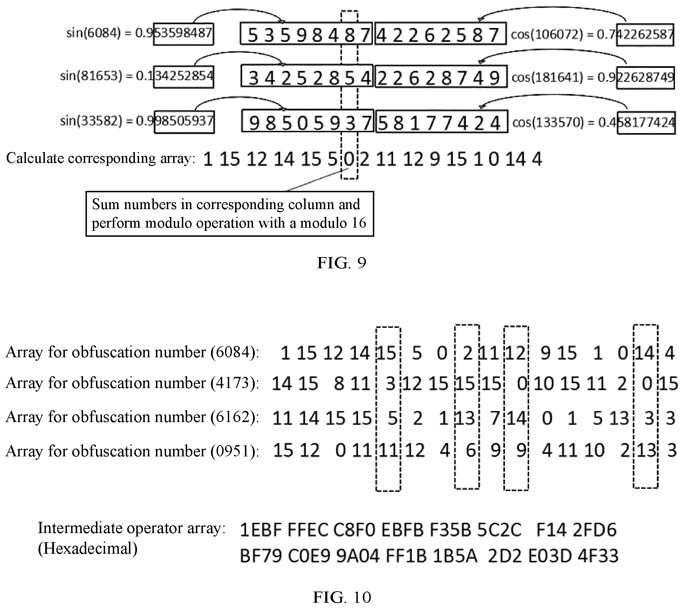

Each obfuscation number and three adjustment numbers are used to generate an array of numbers is generated by using the sine and cosine functions. Four arrays of numbers are obtained and used to generate the intermediate operator of the anonymization algorithm. FIG. 9 is a second schematic diagram of an anonymization algorithm according to an embodiment of the present disclosure. As shown in FIG. 9, the algorithm for calculating the intermediate operator includes the following operations.

Firstly, the obfuscation number is used in the sine function, and the second to ninth digits after the decimal point of the resulting sine value are taken to form an array of eight positive integers. A cosine value of a sum value of the obfuscation number and the adjustment number a is obtained, and the second to ninth digits after the decimal point of the cosine value are used to form an array of eight positive integers. The two arrays are arranged in sequence to form an array of sixteen integers.

Secondly, two new obfuscation numbers are obtained by summing the obfuscation number with the adjustment number b and the adjustment number c, respectively. Sine and cosine values are obtained, respectively, similarly to the first operation, and two arrays of sixteen integers can be obtained.

Thirdly, after three arrays are aligned in a one-to-one manner, an array is formed including sixteen positive integers each less than 16 which are obtained by summing three numbers in each column and further performing modulo operation on the summed value with a modulo 16.

Fourthly, according to the same algorithm, four arrays of positive integers each less than 16 are generated with the four obfuscation numbers.

Fifthly, the four arrays are aligned in a one-to-one manner, as shown in FIG. 10. FIG. 10 is a third schematic diagram of an anonymization algorithm according to an embodiment of the present disclosure. Each column has four numbers (each of which is less than 16), the first number is shifted to the left by 12 digits, the second number is shifted to the left by 8 digits, the third number is shifted to the left by 4 digits, and the shifted four numbers are summed to obtain a positive integer of 16 digits.

Sixthly, the sixteen columns are processed according to the fifth operation, and sixteen 16-digit positive integers are obtained and sequentially arranged to form an intermediate operator for the IMSI number.

Step 3: An anonymized string is constructed.

Two kinds of anonymized string may be constructed, i.e., a sine anonymized string, a cosine anonymized string.

Taking the sine anonymized string as an example, the basic algorithm basically uses an intermediate operator, calculates a sine value of the operator and multiply it by 1000, rounds it, takes an absolute value thereof, sums the absolute value and the intermediate operator, and performs modulo operation on the summed value with a modulo 16 to obtain a positive integer less than 16.

According to the above algorithm, sixteen positive integers each less than 16 can be obtained by respectively calculating the sixteen intermediate operators. The sixteen positive integers are sequentially arranged to form a sine anonymized string. A value of the sine anonymized string in this example is 89735D6D423B696B.

Calculation of the cosine anonymized string is the same as that of the sine anonymized string, except that cosine values are calculated. In this example, the cosine anonymized string is DD9D4F6B07586D7F.

In an algorithm for constructing an anonymized string, before using an intermediate operator, a 16-digit integer can be used to perform a bitwise XOR operation on each intermediate operator. This 16-digit integer is used as the configuration parameter 2 of the anonymization algorithm, and the result of the anonymized string can be adjusted through the configuration parameter 2.

Sine and cosine anonymized strings may be defined as an uplink anonymized string and a downlink anonymized string, respectively.

According to the above description of the algorithm, the anonymization algorithm has the following characteristics.

Firstly, the first operation of the algorithm is to construct a set of intermediate operators through the IMSI number. The values of the intermediate operators can be adjusted by configuration parameter 1. The IMSI number cannot be restored through the intermediate operators.

Secondly, the sine and cosine anonymized strings can be calculated with the intermediate operators, and the values of the anonymized strings can be adjusted by the configuration parameter 2. The intermediate operators cannot be restored through the anonymized strings.

Thirdly, sine and cosine anonymized strings cannot be derived from each other.

Fourthly, the configuration parameter 1 and configuration parameter 2 can be managed at different levels, with no correlation between them.

Fifthly, the anonymized strings are of low probability of conflict. Theoretically, if the global 100 billion IMSI numbers are calculated without using the configuration parameters, the probability of conflict is about 18 millionths. If the configuration parameters are employed for determination, the probability of conflict is lowered.

According to the anonymization algorithm in this example, an uplink anonymized string, a downlink anonymized string, and intermediate operators can be obtained, and the information can be used for terminal identity security in terminal accessing, paging, and global roaming.

### Preferred Example 2

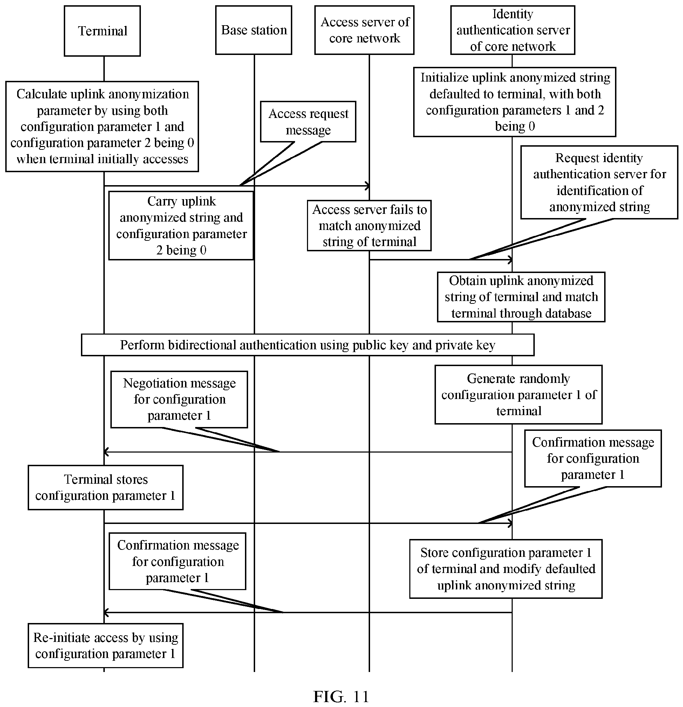

FIG. 11 is an interaction flowchart of a terminal initially accessing a core network according to an embodiment of the present disclosure. As shown in FIG. 11, an initial access process is as follows.

Firstly, a terminal identifier is initialized by an identity authentication server of the core network, and on basis of that both the configuration parameter 1 and the configuration parameter 2 are default values, an uplink anonymization parameter is calculated for an initial identification of the terminal.

Secondly, the terminal initiates an access process when both the configuration parameter 1 and the configuration parameter 2 are initial values.

Thirdly, default values of the configuration parameter 1 and the configuration parameter 2 are used for the initial access, the uplink anonymized string calculated from the default values of the configuration parameters are carried for access request, and the default value of the configuration parameter 2 is carried.

Fourthly, after receiving the uplink anonymized string, the access server of the core network needs to request the identity authentication server for identification if failing to match the corresponding terminal.

Fifthly, after receiving the uplink anonymized string, the identity authentication server matches the stored uplink anonymized string to match the corresponding terminal.

Sixthly, bidirectional authentication between the core network and the terminal is performed using an authentication process in an existing protocol.

Seventhly, after the bidirectional authentication succeeds, the identity authentication server of the core network randomly generates a configuration parameter 1, and generates an uplink anonymized string by using the configuration parameter 1 (and the default value of the configuration parameter 2 are used). If the generated uplink anonymized string does not conflict with the anonymized string already stored in the identity authentication server of the core network, the configuration parameter 1 is sent to the terminal.

Eighthly, after receiving the configuration parameter 1, the terminal stores the configuration parameter 1 and sends a confirmation message to the core network.

Ninthly, after receiving the message, the identity authentication server of the core network replaces the uplink anonymized string defaulted to the terminal, and sends a configuration confirmation message to the terminal.

Tenthly, after receiving the configuration confirmation message from the core network, the terminal disconnects the air interface, and re-initiates an access according to the Embodiment 3 to verify the configuration.

In a preferred example, the terminal may perform a modification process on the configuration parameter 1 in a secure situation to avoid a risk of anonymized string leakage caused by no modification of the configuration parameter 1 for a long time.

### Preferred Example 3

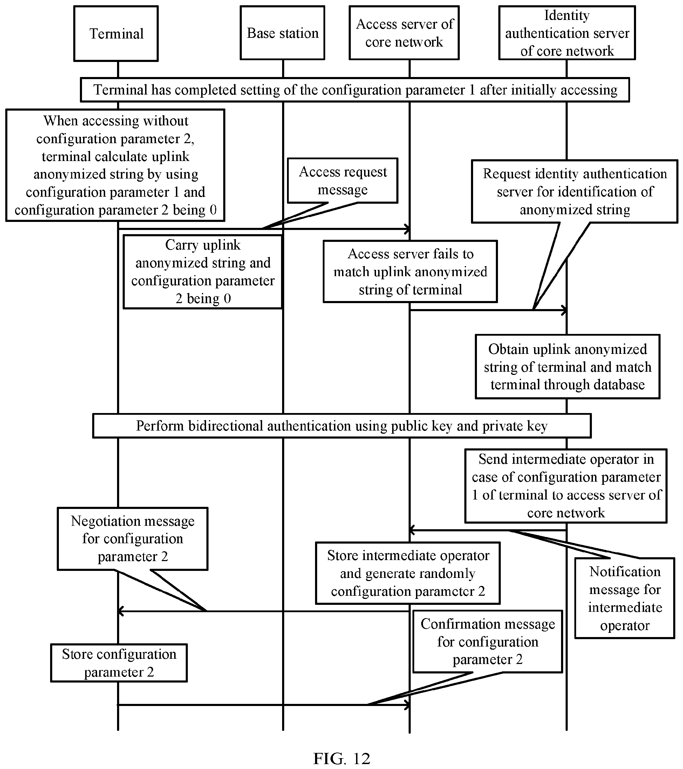

In this example, the terminal initiates access in a case where the terminal completes setting of the configuration parameter 1, but the configuration parameter 2 is not configured or the configuration parameter 2 is out of synchronization. FIG. 12 is an interaction diagram of a configuration flow of a configuration parameter 2 according to an embodiment of the present disclosure. FIG. 12 shows as follows.

Firstly, when the terminal has no configuration parameter 2, an uplink anonymized string is calculated when the configuration parameter 1 and the default value of the configuration parameter 2 (the default value may be set to 0) are used. An access request message carries the uplink anonymized string, the configuration parameter 2 and a PLMN at a home location to initiate the access request.

Secondly, after receiving the request, when failing to match the terminal through the uplink anonymized string, an access server of the core network initiates an identification request to an identity authentication server of a core network at the home location of the terminal, carrying the uplink anonymized string.

Thirdly, after the identity authentication server of the core network identifies the terminal as soon as matching the uplink anonymized string.

Fourthly, after identification of the terminal is completed, an existing mutual authentication process is initiated.

Fifthly, after the terminal is authenticated successfully, the identity authentication server of the core network sends a current intermediate operator of the terminal to the access server of the core network.

Sixthly, after receiving the intermediate operator, the access server of the core network randomly generates a new configuration parameter 2, and calculates a corresponding uplink anonymized string. The access server of the core network ensures that the configuration parameter 2 and the uplink anonymized string are unique in the access server.

Seventhly, after completing the generation of the configuration parameter 2, the access server of the core network sends the configuration parameter 2 to the terminal.

Eighthly, after receiving the configuration 2, the terminal stores the configuration parameter 2 and responds to a configuration validation message.

### Preferred Example 4

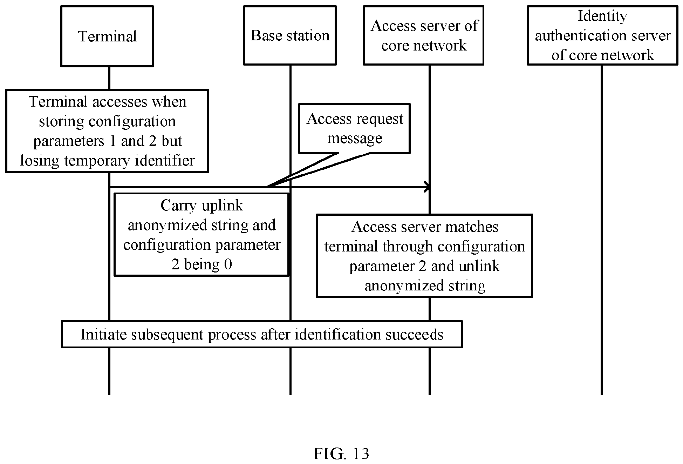

FIG. 13 is a flowchart of accessing of a terminal when both a configuration parameter 1 and a configuration parameter 2 are valid according to an embodiment of the present disclosure. FIG. 13 shows as follows.

Firstly, the terminal generates an uplink anonymized string by using the configuration parameter 1 and the configuration parameter 2.

Secondly, the terminal carries the uplink anonymized string and the configuration parameter 2 to initiate an access request message.

Thirdly, after receiving the request, the core network matches the terminal according to the configuration parameter 2 and the uplink anonymized string.

Fourthly, after the matching succeeds, a subsequent process is performed.

### Preferred Example 5

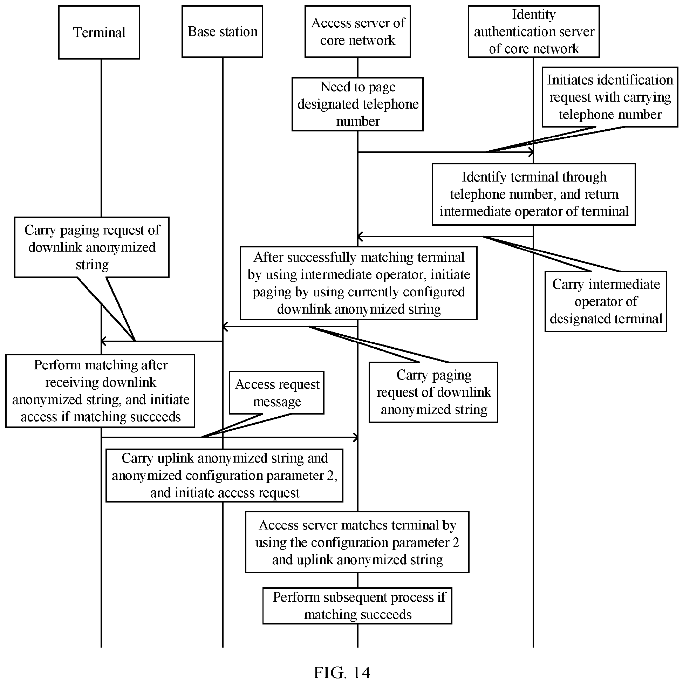

FIG. 14 is an interaction flowchart of a core network paging a designated telephone number according to an embodiment of the present disclosure. As shown in FIG. 14, when the core network needs to page a designated telephone number, a processing flow therefor is as follows.

Firstly, the access server of the core network initiates a telephone number identification request to an identification server.

Secondly, the identification server identifies a terminal through the telephone number, returns an anonymized intermediate operator of a terminal, and sends it to an access server of the core network where the terminal is closest.

Thirdly, the access server of the core network identifies the terminal through the intermediate operator, and obtains a current configuration parameter 2 of the terminal.

Fourthly, the access server of the core network calculates a downlink anonymized string through the configuration parameter 2 and the intermediate operator, and initiates paging.

Fifthly, a base station initiates a paging message using the downlink anonymized string.

Sixthly, after receiving the downlink anonymized string, the terminal matches the downlink anonymized string with a downlink anonymized string in a current configuration, and initiates an access request if the matching is successful.

Seventhly, a terminal access request message carries an uplink anonymized string calculated by the current configuration parameter and the configuration parameter 2 to initiate the access request.

Eighthly, after receiving the uplink anonymized string and the configuration parameter 2, the access server of the core network matches the terminal, and completes terminal identification in the paging process if the matching is successful. Other processes can be followed.

### Preferred Example 6

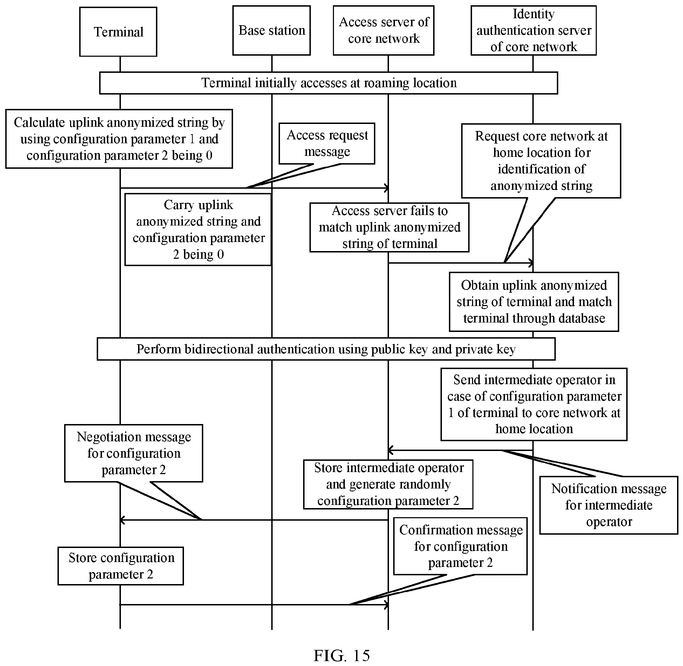

FIG. 15 is an interaction flowchart of a terminal accessing in an international roaming state according to an embodiment of the present disclosure. FIG. 15 shows as follows.

Firstly, when initially accessing in an international roaming area, the terminal calculates an uplink anonymized string by using the default values 0 of a configuration parameter 1 and a configuration parameter 2, and initiates an access request which carries the anonymized string, the configuration parameter 2 and a PLMN at a home location.

Secondly, after receiving the uplink anonymized string, a local core network fails to match the terminal locally, and performs identity authentication to a core network at the home location of the terminal, and the authentication information carries the uplink anonymized string.

Thirdly, after completing identification by using the anonymized string, the core network at the home location initiates an authentication process.

Fourthly, after the authentication succeeds, the core network at the home location sends an intermediate operator of the terminal to the local core network.

Fifthly, the local core network stores the intermediate operator.

Sixthly, a new configuration parameter 2 is randomly generated and a corresponding uplink anonymized string is calculated. The local core network ensures that the configuration parameter 2 and the uplink anonymized string are unique in the access server.

Seventhly, after completing the generation of the configuration parameter 2, the local core network sends the configuration parameter 2 to the terminal.

Eighthly, after receiving the configuration parameter 2, the terminal stores the configuration parameter 2 and responds to a configuration validation message.

### Preferred Example 7

This example provides a method for paging a terminal when the terminal roams in a region covered by multiple core networks and the configuration parameter 2 is modified in another core network, but the terminal returns to a region covered by the original core network and does not interact with the core network.

The terminal may be distinguished according to the serving PLMN, and stores the latest configuration parameter 2 and the corresponding downlink anonymized string under the multiple PLMNs.

When initiating paging, the core network may initiate a paging request to a core network on which the terminal has resides, and the core network on which the terminal has resides may initiate paging using the configuration parameter 2 stored by itself. The terminal only needs to match the downlink anonymized string and the corresponding PLMN to identify whether a paged object is the terminal itself. If the matching is successful, the terminal can initiate access, and perform an authentication process if the access succeeds, and update the configuration parameter 2.

### Embodiment 4

The embodiments of the present disclosure further provide a storage medium storing a computer program. The computer program, when executed by a processor, causes the processor to perform the operations of the method according to any one of the embodiments described above.

Optionally, in this embodiment, the storage medium may be configured to store a computer program for the following operations.

In S 1, a terminal identifier is processed by using a first anonymization algorithm and a first configuration parameter to obtain an intermediate operator. The intermediate operator is configured to identify the terminal identifier of an access layer of a core network for different regions. The terminal identifier is stored in both a terminal and an identity authentication server of the core network.

In S2, the intermediate operator is processed by using a second anonymization algorithm and a second configuration parameter to obtain an uplink anonymized string.

In S3, an access request carrying the uplink anonymized string and the second configuration parameter is sent to the core network. The access request is configured to request for access to the core network and instruct the core network to match the uplink anonymized string and the second configuration parameter stored locally with the uplink anonymized string and the second configuration parameter carried in the access request.

Optionally, in this embodiment, the storage medium may be configured to store a computer program for the following operations.

A first negotiation message issued by the core network is received, where the first negotiation message carries a negotiation value of the first configuration parameter randomly generated by the core network. The access request is resent to the core network by using the negotiation value of the first configuration parameter and the default value of the second configuration parameter.

Optionally, in this embodiment, the storage medium may be configured to store a computer program for the following operation.

A second negotiation message issued by the core network is received, where the second negotiation message carries a negotiation value of the second configuration parameter randomly generated by the core network.

Optionally, in this embodiment, the storage medium may be configured to store a computer program for the following operations.

The terminal receives a paging message from the core network, where the paging message carries a downlink anonymized string, and the downlink anonymized string is obtained by the core network by processing the intermediate operator using a third anonymization algorithm and the second configuration parameter. The terminal determines whether an object paged by the downlink anonymized string is the terminal itself through the downlink anonymized string as well as the first configuration parameter and the second configuration parameter stored locally.

Optionally, in this embodiment, the storage medium may be configured to store a computer program for the following operations.

In S11, an access request sent by a terminal is received, where the access request is configured to request for access to a core network, the access request carries an uplink anonymized string and a second configuration parameter, the uplink anonymized string is obtained by the terminal processing an intermediate operator by using a second anonymization algorithm and a second configuration parameter, the intermediate operator is obtained by the terminal processing a terminal identifier by the terminal by using a first anonymization algorithm and a first configuration parameter, the intermediate operator is configured to identify the terminal identifier of an access layer of a core network for different regions, and the terminal identifier is stored in both the terminal and an identity authentication server of the core network.

In S 12, the uplink anonymized string and the second configuration parameter carried in the access request are matched with the uplink anonymized string and the second configuration parameter locally stored in the core network.

Optionally, in this embodiment, the storage medium may be configured to store a computer program for the following operations.

An access server of the core network sends the uplink anonymized string to the identity authentication server of the core network. The identity authentication server generates randomly a negotiation value of the first configuration parameter after matching of the uplink anonymized string and the second configuration parameter. The identity authentication server sends a first negotiation message to the terminal, where the first negotiation message carries the negotiation value of the first configuration parameter, and the first negotiation message is configured to instruct the terminal to resend the access request to the core network using the negotiation value of the first configuration parameter and the default value of the second configuration parameter.

Optionally, in this embodiment, the storage medium may be configured to store a computer program for the following operations.

The access server receives the access request resent by the terminal, where the resent access request carries a newly generated uplink anonymized string and the default value of the second configuration parameter, and the newly generated uplink anonymized string is obtained by the terminal processing the terminal identifier by using the negotiation value of the first configuration parameter and the default value of the second configuration parameter. The access server sends the newly generated uplink anonymized string to the identity authentication server. The identity authentication server sends a newly generated intermediate operator to the access server after matching the terminal, where the newly generated intermediate operator is obtained by using the negotiation value of the first configuration parameter. The access server stores the newly generated intermediate operator acquired from the identity authentication server, and generates randomly a negotiation value of the second configuration parameter. The access server issues a second negotiation message to the terminal, where the second negotiation message carries the negotiation value of the second configuration parameter.

Optionally, in this embodiment, the storage medium may be configured to store a computer program for the following operations.

When needing to initiate paging to a designated terminal, the access server receives an intermediate operator of the designated terminal sent by the identity authentication server. A downlink anonymized string is sent to the designated terminal after successfully matching the designated terminal with the intermediate operator of the designated terminal, where the downlink anonymized string is obtained by the access server processing the intermediate operator of the designated terminal by using a third anonymization algorithm and the second configuration parameter, and the downlink anonymized string is configured to instruct the designated terminal to send an access request to the access server.

Optionally, in this embodiment, the storage medium may be configured to store a computer program for the following operations.

The core network at the access location sends the uplink anonymized string carried in the access request to a core network at a home location of the terminal. The core network at the access location receives an intermediate operator sent by the core network at the home location, where the intermediate operator received is obtained by the core network at the home location processing by using the negotiation value of the first configuration parameter. The core network at the access location stores the intermediate operator obtained from the core network at the home location, and generates randomly a negotiation value of the second configuration parameter. The core network at the access location sends the negotiation value of the second configuration parameter randomly generated to the terminal.

Optionally, in the present embodiment, the storage medium may include, but is not limited to, a USB flash drive, a read-only memory (ROM), a random access memory (RAM), a removable hard disk, a magnetic disk, an optical disc, or any other medium capable of storing a computer program.

The embodiments of the present disclosure further provide an electronic device including a memory and a processor. The memory stores a computer program, when executed by the processor, causing the processor to perform the operations of the method according to any one of the embodiments described above.

Optionally, the electronic device may further include a transmission device connected to the processor and an input/output device connected to the processor.

Optionally, in this embodiment, the processor may be configured to perform the following operations through the computer program.

In S 1, a terminal identifier is processed by using a first anonymization algorithm and a first configuration parameter to obtain an intermediate operator. The intermediate operator is configured to identify the terminal identifier of an access layer of a core network for different regions. The terminal identifier is stored in both a terminal and an identity authentication server of the core network.

In S2, the intermediate operator is processed by using a second anonymization algorithm and a second configuration parameter to obtain an uplink anonymized string.

In S3, an access request carrying the uplink anonymized string and the second configuration parameter is sent to the core network. The access request is configured to request for access to the core network and instruct the core network to match the uplink anonymized string and the second configuration parameter stored locally with the uplink anonymized string and the second configuration parameter carried in the access request.

Optionally, in this embodiment, the processor may be configured to perform the following operations through the computer program.

A physical downlink shared channel (PDSCH) carrying downlink allocation index (DAI) information is sent to a receiving end, where the DAI information includes count DAI information and/or sum DAI information, the count DAI information is configured to indicate the number of the PDSCHs that have been transmitted by a transmitting end in a carrier at the receiving end until the PDSCH currently transmitted, the sum DAI information is configured to indicate the sum of the number of the PDSCHs that have been transmitted by a transmitting end in a carrier at the receiving end until a current transmission occasion and the number of the PDSCHs that are queued to be transmitted at the current transmission occasion.

Optionally, in this embodiment, the processor may be configured to perform the following operations through the computer program.

A first negotiation message issued by the core network is received, where the first negotiation message carries a negotiation value of the first configuration parameter randomly generated by the core network. The access request is resent to the core network by using the negotiation value of the first configuration parameter and the default value of the second configuration parameter.

Optionally, in this embodiment, the processor may be configured to perform the following operations through the computer program.

A second negotiation message issued by the core network is received, where the second negotiation message carries a negotiation value of the second configuration parameter randomly generated by the core network.

Optionally, in this embodiment, the processor may be configured to perform the following operations through the computer program.

The terminal receives a paging message from the core network, where the paging message carries a downlink anonymized string, and the downlink anonymized string is obtained by the core network by processing the intermediate operator using a third anonymization algorithm and the second configuration parameter. The terminal determines whether an object paged by the downlink anonymized string is the terminal itself through the downlink anonymized string as well as the first configuration parameter and the second configuration parameter stored locally.

Optionally, in this embodiment, the processor may be configured to perform the following operations through the computer program.

In S11, an access request sent by a terminal is received, where the access request is configured to request for access to a core network, the access request carries an uplink anonymized string and a second configuration parameter, the uplink anonymized string is obtained by the terminal processing an intermediate operator by using a second anonymization algorithm and a second configuration parameter, the intermediate operator is obtained by the terminal processing a terminal identifier by the terminal by using a first anonymization algorithm and a first configuration parameter, the intermediate operator is configured to identify the terminal identifier of an access layer of a core network for different regions, and the terminal identifier is stored in both the terminal and an identity authentication server of the core network.

In S 12, the uplink anonymized string and the second configuration parameter carried in the access request are matched with the uplink anonymized string and the second configuration parameter locally stored in the core network.

Optionally, in this embodiment, the processor may be configured to perform the following operations through the computer program.

An access server of the core network sends the uplink anonymized string to the identity authentication server of the core network. The identity authentication server generates randomly a negotiation value of the first configuration parameter after matching of the uplink anonymized string and the second configuration parameter. The identity authentication server sends a first negotiation message to the terminal, where the first negotiation message carries the negotiation value of the first configuration parameter, and the first negotiation message is configured to instruct the terminal to resend the access request to the core network using the negotiation value of the first configuration parameter and the default value of the second configuration parameter.

Optionally, in this embodiment, the processor may be configured to perform the following operations through the computer program.

The access server receives the access request resent by the terminal, where the resent access request carries a newly generated uplink anonymized string and the default value of the second configuration parameter, and the newly generated uplink anonymized string is obtained by the terminal processing the terminal identifier by using the negotiation value of the first configuration parameter and the default value of the second configuration parameter. The access server sends the newly generated uplink anonymized string to the identity authentication server. The identity authentication server sends a newly generated intermediate operator to the access server after matching the terminal, where the newly generated intermediate operator is obtained by using the negotiation value of the first configuration parameter. The access server stores the newly generated intermediate operator acquired from the identity authentication server, and generates randomly a negotiation value of the second configuration parameter. The access server issues a second negotiation message to the terminal, where the second negotiation message carries the negotiation value of the second configuration parameter.

Optionally, in this embodiment, the processor may be configured to perform the following operations through the computer program.

When needing to initiate paging to a designated terminal, the access server receives an intermediate operator of the designated terminal sent by the identity authentication server. A downlink anonymized string is sent to the designated terminal after successfully matching the designated terminal with the intermediate operator of the designated terminal, where the downlink anonymized string is obtained by the access server processing the intermediate operator of the designated terminal by using a third anonymization algorithm and the second configuration parameter, and the downlink anonymized string is configured to instruct the designated terminal to send an access request to the access server.

Optionally, in this embodiment, the processor may be configured to perform the following operations through the computer program.

The core network at the access location sends the uplink anonymized string carried in the access request to a core network at a home location of the terminal. The core network at the access location receives an intermediate operator sent by the core network at the home location, where the intermediate operator received is obtained by the core network at the home location processing by using the negotiation value of the first configuration parameter. The core network at the access location stores the intermediate operator obtained from the core network at the home location, and generates randomly a negotiation value of the second configuration parameter. The core network at the access location sends the negotiation value of the second configuration parameter randomly generated to the terminal.

For specific examples in this embodiment, reference may be made to the examples described in the foregoing embodiments and optional embodiments, and details in this embodiment will not be repeated hereafter.

It will be apparent to those skilled in the art that the modules or operations of the present disclosure described above may be implemented by a general-purpose computing device, may be centralized on a single computing device, or distributed over a network of multiple computing devices, optionally may be implemented by program code executable by the computing device, and thus may be stored in a storage device and executable by the computing device, and in some cases, may be implemented in a sequence different from that as shown or described herein, or may be separately fabricated into various integrated circuit modules, or some of them may be fabricated into various integrated circuit modules. Thus, the present disclosure is not limited to any particular combination of hardware and software.

The foregoing is merely preferred embodiments and examples of the present disclosure and is not intended to limit the present disclosure, which may be modified and varied for those skilled in the art. Any modification, equivalent substitution, improvement, etc. made within the principles of the present disclosure shall fall within the protection scope of the present disclosure.

## Claims

1. A method for sending an access request, comprising:
processing a terminal identifier using a first anonymization algorithm and a first configuration parameter to obtain an intermediate operator, wherein the intermediate operator is configured to identify the terminal identifier of an access layer of a core network for different regions, and the terminal identifier is stored in both a terminal and an identity authentication server of the core network;
processing the intermediate operator using a second anonymization algorithm and a second configuration parameter to obtain an uplink anonymized string; and
sending an access request carrying the uplink anonymized string and the second configuration parameter to the core network, wherein the access request is configured to request for access to the core network and instruct the core network to match the uplink anonymized string and the second configuration parameter stored locally with the uplink anonymized string and the second configuration parameter carried in the access request.

2. The method according to claim 1, wherein when the access request is an access request of the terminal for an initial access to the core network, each of the first configuration parameter and the second configuration parameter is a default value, and after sending the access request carrying the uplink anonymized string and the default value of the second configuration parameter to the core network, the method further comprises:
receiving a first negotiation message sent by the core network, wherein the first negotiation message carries a negotiation value of the first configuration parameter randomly generated by the core network;
processing the terminal identifier using the negotiation value of the first configuration parameter and the default value of the second configuration parameter to obtain a newly generated uplink anonymized string; and
resending the access request to the core network, wherein the resent access request carries the newly generated uplink anonymized string and the default value of the second configuration parameter.

3. The method according to claim 2, wherein after resending the access request to the core network using the negotiation value of the first configuration parameter and the default value of the second configuration parameter, the method further comprises:
receiving a second negotiation message issued by the core network, wherein the second negotiation message carries a negotiation value of the second configuration parameter randomly generated by the core network.

4. The method according to claim 1, wherein the method further comprises:
receiving, by the terminal, a paging message from the core network, wherein the paging message carries a downlink anonymized string, and the downlink anonymized string is obtained by the core network by processing the intermediate operator using a third anonymization algorithm and the second configuration parameter; and
determining, by the terminal, whether an object paged by the downlink anonymized string is the terminal itself through the downlink anonymized string as well as the first configuration parameter and the second configuration parameter stored locally.

5. The method according to claim 3, wherein before receiving the first negotiation message or the second negotiation message issued by the core network, the method further comprises:
performing, by the terminal, bidirectional authentication with the core network using a public key and a private key that are pre-agreed.

6. A method for processing an access request, comprising:
receiving an access request sent by a terminal, wherein the access request is configured to request for access to a core network, the access request carries an uplink anonymized string and a second configuration parameter, the uplink anonymized string is obtained by the terminal processing an intermediate operator by using a second anonymization algorithm and a second configuration parameter, the intermediate operator is obtained by the terminal processing a terminal identifier by the terminal by using a first anonymization algorithm and a first configuration parameter, the intermediate operator is configured to identify the terminal identifier of an access layer of a core network for different regions, and the terminal identifier is stored in both the terminal and an identity authentication server of the core network; and
matching the uplink anonymized string and the second configuration parameter carried in the access request with the uplink anonymized string and the second configuration parameter locally stored in the core network.

7. The method according to claim 6, wherein when the access request is an access request of the terminal for an initial access to the core network, each of the first configuration parameter and the second configuration parameter is a default value, and after receiving the access request, the method further comprises:
sending, by an access server of the core network, the uplink anonymized string to the identity authentication server of the core network;
generating randomly, by the identity authentication server, a negotiation value of the first configuration parameter after matching of the uplink anonymized string and the second configuration parameter; and
sending, by the identity authentication server, a first negotiation message to the terminal, wherein the first negotiation message carries the negotiation value of the first configuration parameter, and the first negotiation message is configured to instruct the terminal to resend the access request to the core network using the negotiation value of the first configuration parameter and the default value of the second configuration parameter.

8. The method according to claim 7, wherein after the identity authentication server sending the first negotiation message to the terminal, the method further comprises:
receiving, by the access server, the access request resent by the terminal, wherein the resent access request carries a newly generated uplink anonymized string and the default value of the second configuration parameter, and the newly generated uplink anonymized string is obtained by the terminal processing the terminal identifier by using the negotiation value of the first configuration parameter and the default value of the second configuration parameter;
sending, by the access server, the newly generated uplink anonymized string to the identity authentication server;
sending, by the identity authentication server, a newly generated intermediate operator to the access server after matching the terminal, wherein the newly generated intermediate operator is obtained by using the negotiation value of the first configuration parameter;
storing, by the access server, the newly generated intermediate operator acquired from the identity authentication server, and generating randomly a negotiation value of the second configuration parameter; and
issuing, by the access server, a second negotiation message to the terminal, wherein the second negotiation message carries the negotiation value of the second configuration parameter.

9. The method according to claim 6, wherein the method further comprises:
when needing to initiate paging to a designated terminal, receiving, by an access server, an intermediate operator of the designated terminal sent by the identity authentication server; and
sending a downlink anonymized string to the designated terminal after successfully matching the designated terminal with the intermediate operator of the designated terminal, wherein the downlink anonymized string is obtained by the access server processing the intermediate operator of the designated terminal by using a third anonymization algorithm and the second configuration parameter, and the downlink anonymized string is configured to instruct the designated terminal to send an access request to the access server.

10. The method according to claim 7, wherein when the terminal initially sends the access request to a core network at an access location for during roaming, the method further comprises:
sending, by the core network at the access location, the uplink anonymized string carried in the access request to a core network at a home location of the terminal;
receiving, by the core network at the access location, an intermediate operator sent by the core network at the home location, wherein the intermediate operator received is obtained by the core network at the home location processing by using the negotiation value of the first configuration parameter;
storing, by the core network at the access location, the intermediate operator obtained from the core network at the home location, and generating randomly a negotiation value of the second configuration parameter; and
sending, by the core network at the access location, the negotiation value of the second configuration parameter randomly generated to the terminal.

11. An apparatus for sending an access request, comprising:
a first processing module configured to process a terminal identifier using a first anonymization algorithm and a first configuration parameter to obtain an intermediate operator, wherein the intermediate operator is configured to identify the terminal identifier of an access layer of a core network for different regions, and the terminal identifier is stored in both a terminal and an identity authentication server of the core network;
a second processing module configured to process the intermediate operator using a second anonymization algorithm and a second configuration parameter to obtain an uplink anonymized string; and
a sending module configured to send an access request carrying the uplink anonymized string and the second configuration parameter to the core network, wherein the access request is configured to request for access to the core network and instruct the core network to match the uplink anonymized string and the second configuration parameter stored locally with the uplink anonymized string and the second configuration parameter carried in the access request.

12. An apparatus for processing an access request, comprising:
a receiving module configured to receive an access request sent by a terminal, wherein the access request is configured to request for access to a core network, the access request carries an uplink anonymized string and a second configuration parameter, the uplink anonymized string is obtained by the terminal processing an intermediate operator by using a second anonymization algorithm and a second configuration parameter, the intermediate operator is obtained by the terminal processing a terminal identifier by the terminal by using a first anonymization algorithm and a first configuration parameter, the intermediate operator is configured to identify the terminal identifier of an access layer of a core network for different regions, and the terminal identifier is stored in both the terminal and an identity authentication server of the core network; and
a matching module configured to match the uplink anonymized string and the second configuration parameter carried in the access request with the uplink anonymized string and the second configuration parameter locally stored in the core network.

13. A storage medium, storing a computer program that, when executed by a processor, causes the processor to perform a method according to any one of claims 1 to 10.

14. An electronic device, comprising a memory and a processor, wherein the memory stores a computer program, when executed by the processor, causing the processor to perform a method according to any one of claims 1 to 10.
